# EUROPÄISCHE PATENTSCHRIFT

(11) **EP 3 744 590 B1**
(45) Veröffentlichungstag und Bekanntmachung des Hinweises auf die Patenterteilung: **29.03.2023**
(21) Anmeldenummer: 20176243.2
(22) Anmeldetag: 25.05.2020
(51) Int. Cl.: B60T 8/18

(54) **BREMSSYSTEM FÜR EINEN LANDWIRTSCHAFTLICH EINSETZBAREN ANHÄNGER SOWIE LANDWIRTSCHAFTLICHER ZUGVERBUND, UMFASSEND EINE ZUGMASCHINE UND WENIGSTENS EINEN DAMIT GEKOPPELTEN ANHÄNGER**
BRAKE SYSTEM FOR AN AGRICULTURAL TRAILER AND AGRICULTURAL TRACK ASSEMBLY COMPRISING A TRACTOR AND AT LEAST ONE TRAILER COUPLED WITH SAME
SYSTÈME DE FREINAGE POUR UNE REMORQUE INSÉRABLE AGRICOLE AINSI QU'ENSEMBLE DE TRACTION AGRICOLE, COMPRENANT UN ENGIN DE TRACTION ET AU MOINS UNE REMORQUE COUPLÉE AUDIT ENGIN DE TRACTION

(30) Priorität: 28.05.2019 DE 102019114346
(43) Veröffentlichungstag der Anmeldung: 02.12.2020
(73) Patentinhaber: Horsch Maschinen GmbH, 92421 Schwandorf (DE)
(72) Erfinder: HASELHOFF, Alexander, 92421 Schwandorf (DE); BODENSTEINER, Thomas, 92421 Schwandorf (DE); KRONES, Manuel, 92421 Schwandorf (DE)
(74) Vertreter: Benninger, Johannes

(56) Entgegenhaltungen:
- EP-A1- 2 014 528
- DE-U- 1 871 081
- ES-U- 1 229 269
- FR-A1- 2 279 595
- FR-A1- 2 428 552
- US-A- 3 416 843
- US-A- 4 090 740

## Beschreibung

Die vorliegende Erfindung betrifft ein pneumatisches, hydraulisches oder ähnliches Bremssystem, einen damit ausgestatteten Anhänger sowie einen landwirtschaftlichen Zugverbund, umfassend eine Zugmaschine und wenigstens einen damit gekoppelten Anhänger mit pneumatischem, hydraulischem oder ähnlichem Bremssystem.

Im Zusammenhang mit landwirtschaftlichen Logistikaufgaben sind die unterschiedlichsten Transportfahrten zu bewältigen, die naturgemäß in vielen Fällen auf öffentlichen Straßen stattzufinden haben. Solche Transportfahrten können sowohl Überführungsfahrten für selbstfahrende oder an eine landwirtschaftliche Zugmaschine angehängte Arbeitsmaschinen sein. Viele dieser Transportfahrten sind jedoch Lastentransporte, bei denen bspw. Feldfrüchte nach ihrer Ernte vom Acker zu vorgesehenen Lagerstätten oder zur Weiterverarbeitung transportiert werden, oder bei denen auszubringendes Saat- oder Pflanzgut, zu verteilender Dünger oder auszubringendes Pflanzenschutzmittel in Tanks oder Vorratsbehältern mitgeführt und zum Bestimmungsort gebracht werden soll.

Typische landwirtschaftliche Anhänger können Transportanhänger wie etwa Ladewagen, Gülletransport- und Verteilanhänger, gezogene Handelsdüngerstreuer o dgl. oder auch Arbeitsanhänger wie große gezogene Pflüge, abmontierte Schneidwerke von Mähdreschern oder Feldhäckslern, gezogene Sämaschinen oder zahlreiche andere landwirtschaftliche Arbeitsmaschinen sein.

Während in der entfernteren Vergangenheit nicht nur die Maschinen- und Fahrzeuggewichte vergleichsweise gering und zudem die Fahrgeschwindigkeiten bei diesen Transportfahrten auf der Straße noch kaum mehr als etwa 20 bis maximal 25 km/h betrugen, haben nicht nur die Fahrzeuge und Anhänger zunehmend an Größe und Gewicht zugelegt. Auch die mit modernen landwirtschaftlichen Fahrzeugen erzielbaren Fahrgeschwindigkeiten liegen inzwischen weitaus höher als in der Vergangenheit. Alle diese Faktoren tragen gemeinsam dazu bei, dass an die Leistungsfähigkeit und Zuverlässigkeit der heute verwendeten Bremssysteme deutlich höhere Anforderungen gestellt werden müssen, als dies in der Vergangenheit der Fall war.

Während Anhänger, die mit kleinen Achslasten und die mit relativ niedriger Fahrgeschwindigkeit bewegt werden, auch ohne eigene Bremssysteme betrieben werden können, da die notwendige Verzögerungen durch das Bremsen des Zugfahrzeuges erreicht wird, ist dies bei höheren Fahrgeschwindigkeiten und/oder größeren Achs- bzw. Anhängelasten des Anhängers keine sinnvolle Option, da hierbei die Gefahr besteht, die Betriebsbremsen des Zugfahrzeuges zu überlasten. Zudem besteht die Gefahr, dass es bei höheren Achs- und Anhängelasten zu einem Überschieben der Zugmaschine kommt, woraus eine erhebliche Unfallgefahr resultiert.

Im Nutzfahrzeugbau sind pneumatische Bremssysteme gebräuchlich, die über manuelle Bremskraftsteller zur beladungsabhängigen Variation des Bremsdrucks verfügen. Solche Bremskraftsteller werden auch im landwirtschaftlichen Transportwesen eingesetzt. Bei derartigen Systemen sind Handregler mit vordefinierten Schaltstellungen (z.B. für die Beladungszustände "leer", "halb-voll" und "voll") vorhanden, die bei Veränderungen des Ladungszustands vom Bediener manuell nachjustiert werden müssen. Des Weiteren sind pneumatische Bremssysteme gebräuchlich, die über eine automatisch lastabhängige Bremskraftregelung verfügen. Technische Bedingung hierfür ist allerdings, dass am Fahrzeug eine Möglichkeit vorhanden ist, die eine technische Ermittlung des Beladungsstandes erlaubt. Dies erfolgt in der Regel durch das Abgreifen der Komprimierung der Fahrzeugfederung oder ähnliches. Die Verwendung einer Federung ist allerdings bei bestimmten Typen von Arbeitsmaschinen wie z.B. von Sämaschinen technisch nicht möglich bzw. sinnvoll. Zudem kann auf keine andere Möglichkeit zurückgegriffen werden, den Beladungszustand abzugreifen, da hierdurch z.B. die Dichtigkeit von Behältern von Feldspritzen negativ beeinflusst werden kann. Da bei Anhängern ohne Fahrwerksfedern eine Eingangsstellgröße für einen herkömmlichen automatisch lastabhängigen Bremskraftregler fehlt, bleibt als sinnvolle Option der Einsatz eines bekannten herkömmlichen Bremskraftstellers, der allerdings einer manuellen Vorgabe des Beladungszustandes bedarf, insbesondere um eine praktikable Begrenzung der Bremskraft bei geringerer Beladung als der maximal zulässigen Beladung oder bei leerem Anhänger zu erreichen.

Ein solcher Bremskraftsteller funktioniert prinzipiell wie ein Druckbegrenzungsventil, d.h. er schneidet den eingesteuerten Druck bei einem bestimmten Wert ab, damit die Räder des gering beladenen oder leeren Anhängers nicht zum Überbremsen neigen. Bei voll beladenem Anhänger kann der Bremskraftsteller seinen Zweck erfüllen, da das Anhängerbremsventil die Bremsintensität steuert und der durch manuelle Vorgabe in seinem maximalen Wert veränderliche Bremskraftsteller bedarfsweise den maximalen Bremsdruck begrenzt, um das unerwünschte und der Fahrstabilität abträgliche Überbremsen der Anhängerräder zu verhindern.

Probleme können insbesondere dann entstehen, wenn der Anhänger gering beladen oder leer, wobei die entsprechende manuelle Einstellung des Bremskraftstellers gewählt ist, und wenn bei einer solchen Einstellung das Zugfahrzeug mit deutlich geringerer als maximal möglicher Verzögerung abgebremst wird, d.h. wenn der Fahrer die Bremse nur mit mittlerem oder geringerem Pedaldruck betätigt. Da bei einer solchen Bremsvorgabe des Fahrers der ausgesteuerte Bremsdruck des Anhängerbremsventils sich immer im Verhältnis zum Vorratsdruck regelt und der Bremskraftsteller den Druck abschneidet, kann es leicht zum Überbremsen oder zum Blockieren der Räder kommen. Somit besteht jederzeit das Risiko, dass bei Bremsungen mit geringerer Intensität keine Abbremsung des Anhängers innerhalb anzustrebender Grenzen möglich ist. Andererseits können insbesondere ungebremste Anhänger oder solche mit ungenauer Einstellung der Bremskraftsteller bei stärkeren Bremsungen auf das Zugfahrzeug "aufschieben".

Diese Bremswertbereiche, die bei unterschiedlichen Bremsintensitäten erreicht werden sollen, werden auch als einzuhaltende Bremsbänder bezeichnet. Genauer gesagt, bezeichnet ein Bremsband eine Vorgabe der Bandbreite für den Druckanstieg im Bremssystem in Abhängigkeit von der Verzögerung.

Nicht nur die höheren Anhängermassen und Fahrgeschwindigkeiten führen zu erhöhten Anforderungen. Auch Kompatibilitäten müssen beachtet werden, denn nicht alle älteren Zugmaschinen lassen sich mit neueren Anhängern problemlos betreiben, was auch umgekehrt - neue Zugmaschine und älterer Anhänger - gilt. Entsprechend der geltenden EU-Verordnung 167/2013 sowie der darauf Bezug nehmenden Verordnung (EU) 2015/68 über die Bremsanlagen (RVBR) müssen die Bremsanlagen von Traktoren und Anhängefahrzeugen bestimmte Kriterien erfüllen, womit nicht zuletzt eine erhöhte Verkehrssicherheit angestrebt wird. Entsprechend dieser aktuell geltenden europäischen Bestimmungen wurde das Bremsband, die Vorgabe der Bandbreite für den Druckanstieg in Abhängigkeit von der Verzögerung, neu festgelegt. Ein wichtiger Aspekt, der hierbei beachtet werden muss, liegt darin, dass dieses Bremsband entsprechend der geltenden Verordnung grundsätzlich auf Anhänger mit einer Eignung für Geschwindigkeiten von mindestens 40 km/h oder darüber ausgelegt ist.

Bestimmungen wurde das Bremsband, die Vorgabe der Bandbreite für den Druckanstieg in Abhängigkeit von der Verzögerung, neu festgelegt. Ein wichtiger Aspekt, der hierbei beachtet werden muss, liegt darin, dass dieses Bremsband entsprechend der geltenden Verordnung grundsätzlich auf Anhänger mit einer Eignung für Geschwindigkeiten von mindestens 40 km/h oder darüber ausgelegt ist.

Grundsätzlich könnte mit einem elektronischen System zur Verhinderung des Blockierens von Rädern beim stärkeren Bremsen, einem sog. EBS-Bremssystem, das unerwünschte Blockieren der Räder des Anhängers verhindert werden, womit die gewünschte Sicherstellung der Fahrsicherheit unter weitgehend allen in der Praxis auftretenden Betriebsbedingungen erreicht wäre.

Eine weitere Problematik kann darin bestehen, dass für landwirtschaftliche Arbeitsmaschinen in aller Regel eine Vielzahl an Ausstattungsoptionen verfügbar ist, wobei es in der Praxis auch durchaus üblich ist, dass Maschinen während ihrer Produktlebenszeit teilweise mehrmals mit Zusatzausstattungen erweitert werden. Da das Hinzufügen von Zusatzausstattungen einen deutlichen Einfluss sowohl auf das Gesamtgewicht der Maschine als auch auf den Schwerpunkt sowie die Gewichtsverteilung haben kann, ist in diesen Fällen folglich eine Anpassung der Regelung der Bremsanlage erforderlich.

Aus der US 3 416 843 A ist beispielsweise eine Druckluftbremsanlage für Zugmaschinen und Anhänger, insbesondere berücksichtigend die vom Anhänger getragenen Lasten, bekannt. Ein Gehäuse definiert hierbei einen Innenraum, zudem ist ein Bremsdruckausgang zum Anschluss an die Bremszylinder z.B. eines Anhängers vorgesehen. Ein Ventilsitz ist zwischen einem Einlass und dem Ausgang angeordnet, um eine Verbindung dazwischen herzustellen, wenn das Ventilelement vom Ventilsitz entfernt ist. Für eine Steuerfeder ist ein Sitz oder eine Halterung vorgesehen, welche auf ein aufrechtes Bolzenelement geschraubt ist. An der Unterseite eines angrenzenden becherförmigen Elements greift ein Nocken an. Anhand des Nockens ist es möglich, eine Kraft vorzugeben oder die Steuerfeder in Übereinstimmung mit einer Last des Anhängers zu beeinflussen. Mittels unterschiedlicher Radien kann der Nocken entsprechend zu unterschiedlichen Beladungszuständen eingestellt werden. Der Nocken ist anhand eines Hebels drehbar.

Aus dem Dokument DE 18 71 081 U ist eine Druckluftbremse für Lastkraftwagenanhänger bekannt. Hierbei ist eine die Druckluftbremse des Anhängers mit derjenigen des Triebwagens verbindende Leitung zu einem Anhängersteuerventil vorgesehen, welches mittels einer Rohrleitung mit einem Bremsluftbehälter verbunden ist. Vom Ausgangsanschluss des Anhängersteuerventils führt eine sich verzweigende Rohrleitung zu den Eingangsseiten einer automatisch lastabhängig wirkenden Einstelleinrichtung und zu einer von Hand über einen Griff gemäß der Fahrzeugbelastung einzustellenden Umstellvorrichtung. Die Ausgangsanschlüsse der Einstelleinrichtung und der Umstellvorrichtung stehen über Rohrleitungen mit je einem Eingangsanschluss eines Doppelrückschlagventils in Verbindung, von dessen Mittelanschluss eine Rohrleitung zu einem Bremszylinder führt. Weiterhin kann die Rohrleitung in ein Gerät führen, in welchem eine Kombination eines Anhängersteuerventils mit einer automatisch lastabhängig wirkenden Einstelleinrichtung untergebracht ist. Das Gestänge ist über ein elastisches Glied mit einer Einstellstange des Gerätes gekoppelt. An der Einstellstange greift ein handbetätigbarer Hebel an, mit welchem sie unabhängig von der Stellung des Gestänges in die einer vollen Belastung des Anhängers entsprechende Stellung einstellbar ist.

Da die oben erwähnten elektronischen EBS-Bremssysteme in aller Regel relativ kostenintensiv, aufgrund der unverzichtbaren Systemintegration schwer nachzurüsten und zudem im landwirtschaftlichen Einsatz aufgrund der notwendigen Sensorkomponenten relativ störungsanfällig sind, hat es sich die vorliegende Erfindung zur Aufgabe gemacht, ein vergleichsweise einfach aufgebautes und damit auch kostengünstig realisierbares System für pneumatische Anhängerbremsen bzw. ein pneumatisch arbeitendes Anhängerbremssystem zur Verfügung zu stellen, das gegenüber bekannten pneumatischen Bremssystemen nur weniger zusätzlicher Komponenten bedarf, so dass es bedarfsweise leicht und mit geringem Montageaufwand bei bestehenden pneumatisch arbeitenden Bremssystemen nachgerüstet werden eine proportionale Regelung des einzusteuernden Drucks in Abhängigkeit vom Beladungszustand ermöglicht und dabei auf eine technisch aufwendig zu realisierende Eingangsstellgröße zur Erfassung des Beladungszustands verzichten kann.

Zur Lösung der genannten Aufgabe schlägt die vorliegende Erfindung eine mit pneumatischem Druck arbeitende Bremsanlage für einen Anhänger mit den Merkmalen des unabhängigen Anspruchs vor, wobei diese Bremsanlage insbesondere für einen landwirtschaftlich einsetzbaren oder eingesetzten Anhänger vorgesehen sein kann.

Bei dem erfindungsgemäßen Bremssystem ist ein mechanisch gesteuerter automatisch lastabhängiger Bremskraftregler (ALB) zur bremskraftabhängigen Vorgabe einer Betätigungskraft von wenigstens zwei Rädern einer Anhängerachse zugeordneten Bremszylindern vorgesehen. Hierbei kann eine Eingangsstellgröße zur lastabhängigen Variation und/oder Drosselung eines Steuerdrucks der Bremszylinder manuell vorgegeben werden, insbesondere in Abhängigkeit von einem Beladungszustand des Anhängers.

Da der Anhänger, bei dem das erfindungsgemäße Bremssystem eingesetzt wird, normalerweise über keine Federung verfügt, fehlt eine herkömmlicherweise vorhandene Eingangsstellgröße für den automatisch lastabhängigen Bremskraftregler, wie sie bspw. aus den Druckwerten von Federbälgen oder der Komprimierung der Achsfederung gefederter Anhänger abgeleitet werden könnte.

Stattdessen werden mittels eines mechanischen Stellhebels des ALBs die Beladungszustände des Fahrzeugs manuell justiert und nicht über die Kompression einer Fahrzeugfederung abgegriffen.

Dazu ist erfindungsgemäß vorgesehen, dass am ALB oder in der Nähe des ALBs eine Kulisse angebracht ist, mit der die für den jeweiligen Beladungszustand des Fahrzeugs erforderliche Hebelstellung abgelesen werden kann.

Vorzugsweise sind Kulisse und Stellhebel derart ausgestaltet, dass die gewünschte Hebelposition fixiert werden kann, so dass eine ungewünschte Veränderung des Hebelzustands ausgeschlossen werden kann. Besonders bevorzugt ist die Kulisse derart ausgestaltet, dass sie über eine einfache und lösbare mechanische Verbindung befestigt ist. Die für die jeweiligen Beladungszustände (z.B. leer / halbvoll / voll) erforderlichen Anstellwinkel des Stellhebels können gewichtsabhängig berechnet werden. Es ist also möglich, für ausstattungsabhängige Achslastbereiche einer Baureihe die benötigten Kulissen vorab zu definieren. Auf diese Weise ist es möglich, bei Erweiterung der Ausstattung einer Maschine lediglich die alte Kulisse zu demontieren und eine für das neue Gesamtgewicht der Maschine passende Kulisse zu montieren.

Eine sinnvolle Auslegung der Bremsanlage kann bspw. vorsehen, dass der oberhalb von vier bar liegende Vorratsdruck mittels des manuell verstellbaren automatisch lastabhängigen Bremskraftregler, dem sog. ALB, auf einen Steuer- oder Schaltdruck zwischen etwa zwei bis etwa vier bar reduziert werden kann.

Die vorliegende Erfindung bezieht sich weiterhin auf einen landwirtschaftlichen Lastenanhänger oder auf einen ähnlichen oder vergleichbaren Anhänger, der über mindestens eine Achse und mindestens ein gebremstes Rad verfügt, und der mit einer mit pneumatischem Druck oder mit hydraulischem Druck arbeitenden Bremsanlage gemäß einer der zuvor beschriebenen Ausführungsvarianten ausgestattet ist. Wahlweise kann dieser landwirtschaftliche Lastenanhänger auch über mindestens zwei Achsen und mindestens vier gebremste Räder verfügen.

Zudem bietet der Einsatz des erfindungsgemäßen Bremssystems besonders dann die erwähnten Vorzüge, wenn es sich bei dem landwirtschaftlichen Lastenanhänger um einen solchen handelt, bei dem die wenigstens eine Achse gegenüber einem Aufbau ungefedert ist, da hier die üblicherweise vorhandene Eingangsgröße für die beladungsabhängige und lastabhängige Variation des Bremsdrucks fehlt.

Schließlich umfasst die Erfindung auch einen landwirtschaftlichen Zugverbund, umfassend eine landwirtschaftliche Zugmaschine und einen daran angehängten und damit mechanisch sowie pneumatisch gekoppelten landwirtschaftlichen Lastenanhänger, wie er zuvor definiert wurde, der mit einer mit pneumatischem Druck oder mit hydraulischem Druck arbeitenden Bremsanlage gemäß einer der zuvor beschriebenen Ausführungsvarianten ausgestattet ist.

Im Folgenden sollen Ausführungsbeispiele die Erfindung und ihre Vorteile anhand der beigefügten Zeichnungen näher erläutern.
Fig. 1 zeigt ein schematisches Pneumatikschaltbild eines erfindungsgemäßen Bremssystems für einen Anhänger oder für eine landwirtschaftliche Arbeitsmaschine.
Fig. 2A zeigt eine Ausführungsvariante eines Bremsmoduls, umfassend ein Gehäuse mit darin befindlichen Komponenten der Bremsanlage gemäß Fig. 1 sowie einen außen am Gehäuse angeordnet Stellhebel mit Kulisse.
Fig. 2B zeigt einen Innenaufbau des Bremsmoduls gemäß Fig. 2A mit seinen einzelnen Komponenten und ohne Gehäuse.
Fig. 3 zeigt in zwei Darstellungen eine Kulisse des Bremsmoduls gemäß Fig. 2A, die in Zusammenwirkung mit einem Stellhebel eine leichte Anpassung eines maximalen Bremsdrucks in Abhängigkeit von einem Beladungszustand ermöglicht.

Die dargestellte Ausführungsform soll lediglich ein praktisch einsetzbares Beispiel darstellen, wie das erfindungsgemäße Bremssystem ausgestaltet sein kann, soll aber keine abschließende Begrenzung darstellen.

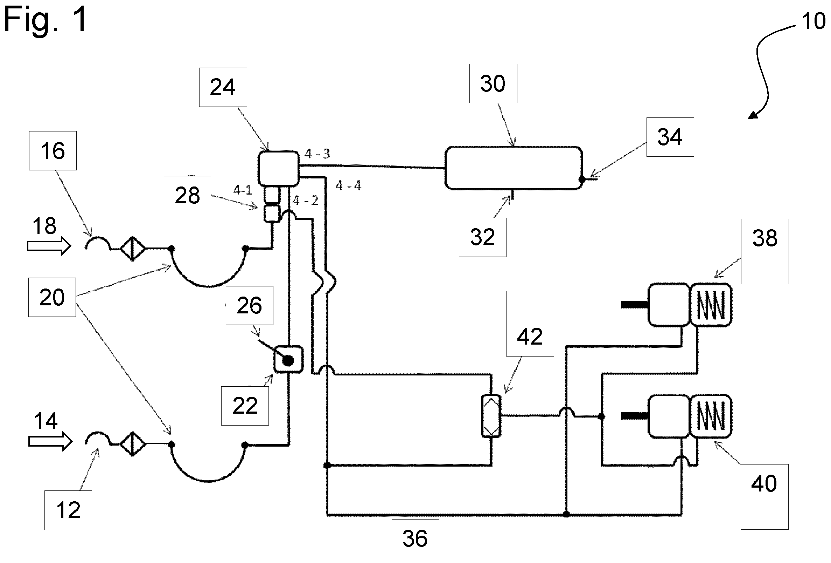

Die Fig. 1 zeigt ein schematisches Pneumatikschaltbild einer sinnvollen Ausführungsvariante eines erfindungsgemäßen Bremssystems in Gestalt einer Druckluftbremsanlage für einen Anhänger, der insbesondere für einen landwirtschaftlichen Einsatz vorgesehen sein kann, oder für eine gezogene landwirtschaftliche Arbeitsmaschine. Da eine solche landwirtschaftliche Arbeitsmaschine bzw. ein solcher landwirtschaftlich eingesetzter Anhänger typischerweise über keine Federung an ihren/seinen zwei oder drei Achsen verfügt, fehlt eine wesentliche Stellgröße zur Ansteuerung eines normalerweise eingesetzten automatisch lastabhängigen Bremskraftreglers, wie er auch im vorliegenden Bremssystem eingesetzt werden soll. Allerdings wird er hier mit einem zusätzlichen manuell verstellbaren Bremskraftregler kombiniert, mit dessen Hilfe die nicht vorhandene Stellgröße auf manuellem Wege simuliert werden kann.

Die gesamte Bremsanlage, die hier auch als Bremssystem bezeichnet wird, ist hierbei mit der Bezugsziffer 10 gekennzeichnet. Die landwirtschaftliche Arbeitsmaschine oder der landwirtschaftliche Anhänger selbst sind in der Darstellung nicht erkennbar, ebenso wenig wie das Zugfahrzeug, mit dem die Arbeitsmaschine oder der Anhänger mechanisch, hydraulisch und pneumatisch sowie typischerweise auch elektrisch gekoppelt werden kann. Die übrigen Komponenten, die auf dem Schaltbild erkennbar sind, werden nachfolgend in ihrer Funktion sowie in ihrer Zusammenwirkung untereinander erläutert.

Die Bezugsziffer 12 bezeichnet in der Fig. 1 einen Steuerdruckanschluss, der in der Praxis oftmals auch als "Kupplungskopf gelb" bezeichnet und entsprechend farbig gekennzeichnet ist. Über diesen ersten Druckanschluss 12 mit nachgeschaltetem Luftfilter wird die pneumatische Bremsanlage 10 mit Steuerdruck 14 versorgt, welcher der Betätigung der nachfolgend näher erläuterten Radbremsventile dient.

Eine weitere pneumatische Schnittstelle der Bremsanlage 10 ist durch einen zweiten Druckanschluss 16 gebildet, der als Vorratsdruckanschluss 16 fungiert und im weiteren Zusammenhang auch als solcher bezeichnet wird. In der Praxis wird dieser Vorratsdruckanschluss 16 auch als "Kupplungskopf rot" bezeichnet und kann entsprechend farbig gekennzeichnet sein. Auch diesem zweiten Druckanschluss 16 ist ein Luftfilter nachgeschaltet. Der zweite Druckanschluss 16 dient der Versorgung mit Vorratsdruck 18.

Sowohl der erste Druckanschluss 12 als auch der zweite Druckanschluss 16 können in der Praxis bspw. jeweils durch genormte Kupplungsköpfe entsprechend DIN ISO 1728 ausgeführt sein.

Über eine Schlauchleitung 20 ist der erste Druckanschluss 12 mit einem automatisch lastabhängigen Bremskraftregler 22 gekoppelt, der im vorliegenden Zusammenhang auch kurz als ALB 22 bezeichnet wird. Somit kann über den ersten Druckanschluss 12 bzw. über den "Kupplungskopf gelb" und den ALB 22 ein definierter und verstellbarer Steuerdruck zu einem Anschluss 4-2 eines Anhängerbremsventils 24 übertragen werden.

Als Schlauchleitungen 20 eignen sich bspw. Pneumatikleitungen, die der DIN 74310 entsprechen.

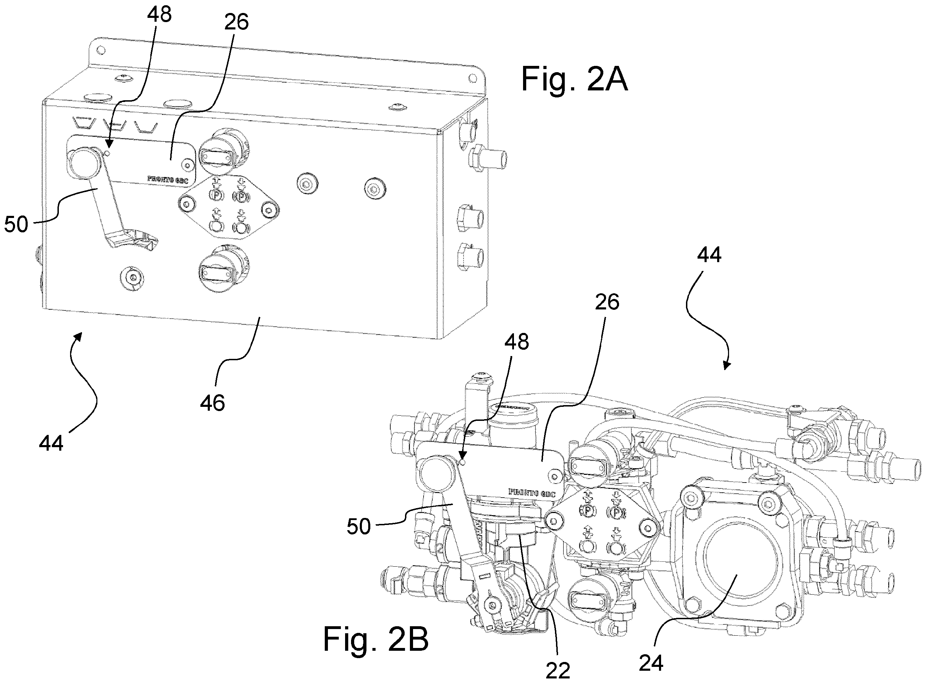

Der automatisch lastabhängige Bremskraftregler 22 weist eine in den Figuren 2A und 2B näher erläuterte Kulisse 26 mit Stellhebel auf. Mittels des mit der Kulisse 26 zusammenwirkenden Stellhebels kann bedarfsweise und abhängig vom Beladungszustand des Fahrzeugs oder des Anhängers der Steuerdruck 14 reguliert bzw. reduziert werden, um die gewünschten Bremseigenschaften der pneumatischen Bremsanlage 10 zu erreichen.

Über eine weitere Schlauchleitung 20 ist der zweite Druckanschluss 16 bzw. der "Kupplungskopf rot" an einem Anschluss 4-1 des Anhängerbremsventils 24 angeschlossen. Dieser Anschluss 4-1 befindet sich an einem Doppellöseventil 28 der Betriebs- und Feststellbremse und dient zur Versorgung des Doppellöseventils 28 mit dem Vorratsdruck 18 zur Speisung eines Druckkessels 30. Bei am zweiten Druckanschluss 16 anliegendem Vorratsdruck 18 wird durch das Anhängerbremsventil 24 über den Anschluss 4-3 der Druckkessel 30 befüllt.

Am Druckkessel 30 ist ein Entwässerungsventil 32 sowie ein Prüfanschluss 34 erkennbar. Dieser Prüfanschluss kann bspw. der ISO 3583:1984 entsprechen.

Eine Bremsleitung 36 der Betriebsbremse verläuft von einem Anschluss 4-4 des Anhängerbremsventils 24 zu den Membranteilen der Federspeicherbremszylinder 38 und 40. Der notwendige Druck zur Belüftung der Federspeicher in den Bremszylindern 38 und 40 wird aus der Vorratsleitung abgezweigt. Die Luft gelangt dabei über das Doppellöseventil 28 der Betriebs- und Feststellbremse zu einem Zweiwegeventil 42 und von dort in den Federspeicherteil der Bremszylinder 38 und 40. Auf diese Weise wird der Federdruck entlastet und die Feststellbremse gelöst.

Um eine Überlastung der Bremse durch das gleichzeitige Einwirken der Betätigungskräfte der Feststell- und Betriebsbremse zu verhindern, ist die Bremsleitung 36 der Betriebsbremse ebenfalls über das Zweiwegeventil 42 mit den Federspeicherteilen der Bremszylinder 38 und 40 verbunden. Dadurch kann die komprimierte Luft in den jeweiligen Federspeicherteil der Bremszylinder 38 und 40 strömen und diesen öffnen, während gleichzeitig die Betriebsbremse angesteuert wird.

Die Betriebsbremse wird dadurch betätigt, dass bei anliegendem Steuerdruck am Anschluss 4-2 und gleichzeitig anliegendem Vorratsdruck an den Anschlüssen 4-1 oder 4-3 des Anhängerbremsventils 24 die Bremszylinder 38 und 40 über den Abführanschluss 4-4 mit Betriebsdruck gespeist werden. Das bzw. der ALB 22 regelt den dem Anhängerbremsventil 24 zur Verfügung gestellten Steuerdruck in Abhängigkeit von der gewählten Position des Stellhebels (vgl. Fig. 2). Hierbei ist die Verwendung von verschiedenen Kulissen 26 mit für die jeweiligen Gewichtszustände der Maschine vordefinierten Einrastpunkten für den Stellhebel möglich. Am Anhängerbremsventil 24 erfolgt anschließend eine weitere Regelung der Höhe des an die Bremszylinder 38 und 40 abzugebenden Betriebsdrucks in Abhängigkeit vom jeweils eingehenden Steuerdruck.

Bei nicht anliegendem Steuerdruck und gleichzeitig anliegendem Vorratsdruck erfolgt keine Bremsung, so dass in diesem Betriebszustand ausschließlich der Druckkessel 30 gespeist wird. Bei nicht anliegendem Vorratsdruck ist die Betriebsbremse betätigt. Über das Doppellöseventil 28 der Betriebs- und Feststellbremse kann die Betriebsbremse bedarfsweise gelöst werden.

Die Aktivierung der Feststellbremse wird nachfolgend erläutert. Bei abgekoppelten Steuer- und Vorratsleitungen 12 und 16 und noch vorhandenem Vorratsdruck erfolgt weiterhin die Bremsung der Maschine über die Betriebsbremse. Soll die Bremsung über die Federspeicher der Bremszylinder 38 und 40 erfolgen, müssen die Federspeicher über das Doppellöseventil 28 der Betriebs- und Feststellbremse entlüftet werden. Sinkt der Druck im Druckkessel 30, beginnen die Federspeicher der Bremszylinder 38 und 40 ab einem bestimmten Druckgrenzwert langsam einzufallen; die Feststellbremse ist eingelegt. Dieser Druckgrenzwert kann bspw. bei ca. 4,8 bar liegen.

Soll die Feststellbremse bei nicht angeschlossenem Vorratsdruck gelöst werden, muss der Druckkessel 30 ausreichend befüllt und das Doppellöseventil 28 der Betriebsund Feststellbremse manuell betätigt werden. Ist kein ausreichender Druck im Druckkessel 30 vorhanden, können die Federspeicher wahlweise über eine mechanische Vorrichtung an den Bremszylindern 38 und 40 gelöst werden.

Aus Vereinfachungsgründen zeigt die Fig. 1 lediglich zwei Bremszylinder 38 und 40 einer Achse des Anhängers oder der gezogenen landwirtschaftlichen Arbeitsmaschine, der oder die wahlweise zwei oder drei Achsen mit jeweils den Rädern aller Achsen zugeordneten gleichartigen Bremszylindern 38 bzw. 40 aufweisen kann, die in entsprechender Weise vom ALB 22 mit variabel einstellbarem Bremsdruck beaufschlagt werden können. Die Bremszylinder 38 und 40 sorgen für eine gleichmäßige und vom jeweiligen Steuerdruck abhängige Betätigung der Radbremsen des Anhängers (hier nicht gezeigt) oder der landwirtschaftlichen Arbeitsmaschine (hier ebenfalls nicht gezeigt).

Die beiden schematischen Perspektivansichten der Figuren 2A und 2B zeigen eine beispielhafte Ausgestaltung eines Bremsmoduls 44 mit einem Gehäuse 46, in dem das Anhängerbremsventil 24 mit seinen in Fig. 1 erläuterten Anschlüssen und das ALB 22 in unmittelbarer Nähe untergebracht sind. Während die Ansicht der Fig. 2A das geschlossene Gehäuse 46 zeigt, verdeutlicht die Fig. 2B in einer teiltransparenten Darstellung die räumliche Anordnung des ALB 22 und des Anhängerbremsventils 24 innerhalb des Bremsmoduls 44.

Beide Ansichten zeigen zudem die oben erwähnte Kulisse 26, die mehrere Einrastpunkte 48 für einen schwenkbaren Stellhebel 50 bietet, so dass dieser in verschiedene definierte Positionen gebracht werden kann, die durch die Einrastpunkte 48 der Kulisse 26 vorgegeben sind. In Abhängigkeit von der jeweils gewählten Position des Stellhebels 50 wird im ALB 22 der dem benachbarten Anhängerbremsventil 24 zur Verfügung gestellte Steuerdruck geregelt.

Besonders vorteilhaft ist die Austauschbarkeit der Kulissen 26, die jeweils unterschiedlich angeordnete Einrastpunkte 48 aufweisen können. Hierdurch ist es auf sehr einfache Weise möglich, durch Verwendung unterschiedlicher Kulissen 26 mit jeweils unterschiedlich positionierten Einrastpunkten 48 eine Anpassung an die jeweils unterschiedlichen Gewichtszustände der Maschine vorzunehmen. Entsprechend der unterschiedlich positionierten Einrastpunkte 48 kann der Stellhebel 50 in die jeweils passenden Positionen gebracht werden. Am Anhängerbremsventil 24 erfolgt anschließend eine weitere Regelung der Höhe des an die Bremszylinder 38 und 40 abzugebenden Betriebsdrucks in Abhängigkeit vom jeweils eingehenden Steuerdruck.

Der insbesondere für einen landwirtschaftlichen Einsatz vorgesehene Anhänger oder die landwirtschaftliche Arbeitsmaschine, der bzw. die typischerweise über keine Federung an einer Achse oder an zwei oder drei Achsen verfügen, können durch diese bauliche Abweichung von Gütertransportanhängern, wie sie etwa für den straßengebundenen Gütertransport eingesetzt werden, dem in der erfindungsgemäßen Bremsanlage 10 eingesetzten Anhängerbremsventil 24 eine sinnvolle Stellgröße liefern, wie sie normalerweise aus dem Federdruck eines Federbalges hergeleitet und abgegriffen werden kann, sofern der Anhänger bspw. mit einer Luftfederung mit Federbälgen ausgestattet wäre. Stattdessen wird das Anhängerbremsventil 24 in der gezeigten Weise mit dem vorgeschalteten manuell verstellbaren ALB 22 kombiniert, mit dessen Hilfe die nicht aus dem pneumatischen Druck des Federbalges des belasteten oder nicht belasteten Anhängers ableitbare Stellgröße auf manuellem Wege simuliert werden kann.

Im Ergebnis kann mittels der gezeigten Ausführungsvariante der erfindungsgemäßen Bremsanlage 10 gewährleistet werden, dass durch entsprechende Einstellungen des ALB 22, die sich an der jeweiligen Beladung des Anhängers zu orientieren hat, die Räder des Anhängers auch bei verschieden starken Bremsvorgängen jeweils im vorgeschriebenen Bremsband bleiben. Außerdem können durch Austausch der Kulisse 26 die Einstellwerte an unterschiedliche Bauausführungen und/oder Ausstattungsvarianten der Arbeitsmaschine angepasst werden.

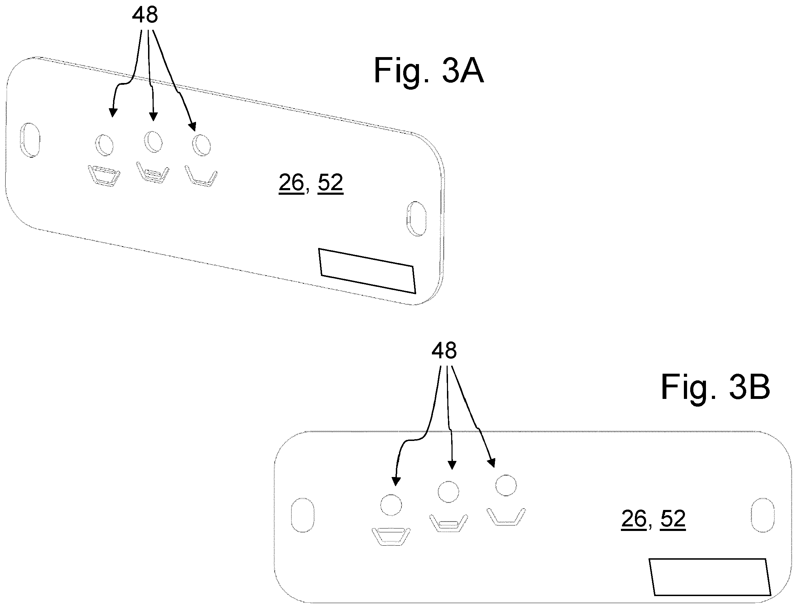

Die beiden Darstellungen der Fig. 3A und der Fig. 3B zeigen nochmals die schon anhand der Figuren 2A und 2B erläuterte Kulisse 26 des Bremsmoduls 44, deren unterschiedlich positionierte Einrastpunkte 48 in Zusammenwirkung mit dem Stellhebel 50 (vgl. Fig. 2A und Fig. 2B) eine schnelle und leichte Anpassung des maximalen Bremsdrucks in Abhängigkeit von einem Beladungszustand ermöglichen.

Die Kulisse 26 ist als auswechselbares Blechschild 52 ausgebildet, so dass unterschiedliche Blechschilder 52 mit jeweils unterschiedlichen Kulissen 26 auch jeweils unterschiedliche Positionen und/oder Abstände der Einrastpunkte 48 bieten können. Ggf. könnten sogar in unterschiedlichen Kulissen 26 mehr als die drei gezeigten Einrastpunkte 48 vorgesehen sein, so dass der Stellhebel 50 bspw. auch in vier oder fünf unterschiedliche Positionen für jeweils unterschiedliche Beladungszustände des Fahrzeugs oder Anhängers oder der landwirtschaftlichen Arbeitsmaschine gebracht werden kann.

Wie es die perspektivische Ansicht der Fig. 3A sowie die Frontalansicht der Fig. 3B erkennen lässt, ist dem linken Einrastpunkt 48 ein Symbol für ein voll beladenes Fahrzeug oder für einen voll beladenen Anhänger oder für eine voll beladene landwirtschaftliche Arbeitsmaschine zugeordnet. Dem mittleren von insgesamt drei in der Kulisse 26 vorhandenen Einrastpunkten 48 ist ein Symbol für ein etwa zur Hälfte beladenes Fahrzeug, eine zur Hälfte beladene Arbeitsmaschine oder einen zur Hälfte beladenen Anhänger zugeordnet, während dem rechten Einrastpunkt ein Symbol für einen nicht oder nur leicht beladenen Anhänger oder eine nicht oder nur leicht beladene landwirtschaftliche Arbeitsmaschine bzw. ein nicht oder nur leicht beladenes Fahrzeug zugeordnet ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Bremsanlage, Druckluftbremsanlage, pneumatische Bremsanlage
- 12: erster Druckanschluss, Steuerdruckanschluss ("Kupplungskopf gelb")
- 14: Steuerdruck
- 16: zweiter Druckanschluss, Vorratsdruckanschluss ("Kupplungskopf rot")
- 18: Vorratsdruck
- 20: Schlauchleitung
- 22: automatisch lastabhängiger Bremskraftregler, ALB
- 24: Anhängerbremsventil
- 26: Kulisse
- 28: Doppellöseventil, Doppellöseventil der Betriebs- und Feststellbremse
- 30: Druckbehälter, Druckkessel
- 32: Entwässerungsventil
- 34: Prüfanschluss
- 36: Bremsleitung
- 38: Bremszylinder
- 40: Bremszylinder
- 42: Zweiwegeventil
- 44: Bremsmodul
- 46: Gehäuse
- 48: Einrastpunkte
- 50: Stellhebel
- 52: Blechschild, auswechselbares Blechschild

## Patentansprüche

1. Mit Druck arbeitende pneumatische Bremsanlage (10) für einen Anhänger, insbesondere für einen landwirtschaftlich einsetzbaren oder eingesetzten Anhänger, oder für eine landwirtschaftliche Arbeitsmaschine, bei dem ein Anhängerbremsventil (24) zur bremskraftabhängigen Vorgabe einer Betätigungskraft von wenigstens zwei Rädern einer Anhänger- oder Arbeitsmaschinenachse zugeordneten Bremszylindern (38, 40) vorgesehen ist, wobei eine Eingangsstellgröße zur lastabhängigen Variation und/oder Drosselung eines Steuerdrucks der Radbremszylinder (38, 40) mittels eines einstellbaren automatisch lastabhängigen Bremskraftreglers (22) manuell in Abhängigkeit von einem Beladungszustand des Anhängers oder der landwirtschaftlichen Arbeitsmaschine vorgebbar ist, **dadurch gekennzeichnet, dass** dem pneumatisch angesteuerten Anhängerbremsventil (24) der manuell verstellbare automatisch lastabhängige Bremskraftregler (22) vorgeschaltet ist, der eine manuell einstellbare Variation in Form einer gestuften oder variablen Begrenzung der dem Anhängerbremsventil (24) als Eingangsstellgröße zur Verfügung gestellten Steuerdrucks (14) ermöglicht.

2. Bremsanlage (10) nach Anspruch 1, bei der die Eingangsstellgröße zur Ansteuerung des Anhängerbremsventils (24) mittels des vorgeschalteten automatisch lastabhängigen Bremskraftreglers (22) variierbar ist.

3. Bremsanlage nach Anspruch 1 oder 2, bei welcher der automatisch lastabhängige Bremskraftregler (22) einen manuell verschwenkbaren oder verschiebbaren Stellhebel (50) aufweist, der entlang einer Kulisse (26) verschiebar oder verschwenkbar ist, die mehrere Einrastpunkte (48) zur Definition mehrerer diskreter Positionen des Stellhebels (50) und damit im Zusammenhang stehender Druckregelverhältnisse aufweist.

4. Bremsanlage nach Anspruch 3, bei der die Kulisse (26) austauschbar an einem Gehäuse (46) eines zumindest den automatisch lastabhängigen Bremskraftregler (22) enthaltenden Bremsmoduls (44) angeordnet ist, wobei verschiedene Kulissen (26) jeweils unterschiedlich positionierte Einrastpunkte (44) zur Variation der den Stellhebel (50) festlegenden Positionen oder Schwenkstellungen aufweisen.

5. Bremsanlage nach Anspruch 3 oder 4, bei der unterschiedliche austauschbare Kulissen (26) jeweils unterschiedlichen Ausstattungs- und/oder Belastungszuständen des Anhängers oder der Arbeitsmaschine zugeordnet sind.

6. Gezogene landwirtschaftliche Arbeitsmaschine, die über mindestens eine Achse und mindestens ein gebremstes Rad verfügt, und die mit einer mit pneumatischem Druck arbeitenden Bremsanlage (10) gemäß einem der Ansprüche 1 bis 5 ausgestattet ist.

7. Gezogene landwirtschaftliche Arbeitsmaschine, die über mindestens zwei Achsen und mindestens vier gebremste Räder verfügt, und die mit einer mit pneumatischem Druck arbeitenden Bremsanlage (10) gemäß einem der Ansprüche 1 bis 5 ausgestattet ist.

8. Zugverbund, umfassend eine landwirtschaftliche Zugmaschine und einer daran angehängten und damit mechanisch sowie pneumatisch gekoppelte landwirtschaftliche Arbeitsmaschine gemäß einem der Ansprüche 6 oder 7, die mit einer mit pneumatischem Druck arbeitenden Bremsanlage (10) gemäß einem der Ansprüche 1 bis 5 ausgestattet ist.

9. Landwirtschaftlicher Lastenanhänger, der über mindestens eine Achse und mindestens ein gebremstes Rad verfügt, und der mit einer mit pneumatischem Druck arbeitenden Bremsanlage (10) gemäß einem der Ansprüche 1 bis 5 ausgestattet ist.

10. Landwirtschaftlicher Lastenanhänger, der über mindestens zwei Achsen und mindestens vier gebremste Räder verfügt, und der mit einer mit pneumatischem Druck arbeitenden Bremsanlage (10) gemäß einem der Ansprüche 1 bis 5 ausgestattet ist.

11. Zugverbund, umfassend eine landwirtschaftliche Zugmaschine und einen daran angehängten und damit mechanisch sowie pneumatisch gekoppelten landwirtschaftlichen Lastenanhänger gemäß einem der Ansprüche 9 oder 10, der mit einer mit pneumatischem Druck arbeitenden Bremsanlage (10) gemäß einem der Ansprüche 1 bis 5 ausgestattet ist.

## Claims

1. A pneumatic-pressure-operated brake system (10) for a trailer, in particular, for an agriculturally usable or used trailer, or for an agricultural work machine, in which trailer a trailer brake valve (24) is provided for the brake-force-dependent specification of an actuating force of brake cylinders (38, 40) assigned to at least two wheels of a trailer axle or work machine axle, wherein an input control variable is manually specifiable for the load-dependent variation and/or throttling of a control pressure of the wheel brake cylinders (38, 40) by means of an adjustable, automatic load-dependent brake pressure regulator (22) based on a load state of the trailer or of the agricultural work machine, **characterised in that** the manually adjustable, automatic load-dependent brake pressure regulator (22) is provided upstream of the pneumatically actuated trailer brake valve (24), with the brake pressure regulator (22) enabling a manually adjustable variation in the form of a staged or variable limitation of the control pressure (14) provided as input control variable to the trailer brake valve (24).

2. The brake system (10) according to claim 1, in which the input control variable for the actuation of the trailer brake valve (24) is variable by means of the upstream, automatic load-dependent brake pressure regulator (22).

3. The brake system according to claim 1 or 2, in which the automatic load-dependent brake pressure regulator (22) has a manually swivelable or shiftable adjustment lever (50), which is shiftable or swivelable along a snap-in plate (26) having a plurality of snap-in points (48) for the definition of a plurality of discrete positions of the adjustment lever (50) and therewith associated pressure control conditions.

4. The brake system according to claim 3, in which the snap-in plate (26) is arranged to be exchangeable at a housing (46) of a brake module (44) containing at least the automatic load-dependent brake pressure regulator (22), wherein different snap-in plates (26) each have differently positioned snap-in points (48) for the variation of the positions or swivel positions securing the adjustment lever (50).

5. The brake system according to claim 3 or 4, in which different exchangeable snap-in plates (26) are each assigned to different equipment states and/or load states of the trailer or of the work machine.

6. A towed agricultural work machine, which has at least one axle and at least one braked wheel, and which is equipped with a pneumatic-pressure-operated brake system (10) according to one of the claims 1 to 5.

7. The towed agricultural work machine, which has at least two axles and at least four braked wheels, and which is equipped with a pneumatic-pressure-operated brake system (10) according to one of the claims 1 to 5.

8. A tractor-trailer combination, comprising an agricultural towing machine and an agricultural work machine according to one of the claims 6 or 7 hitched thereto and coupled both mechanically and pneumatically therewith, which work machine is equipped with a pneumatic-pressure-operated brake system (10) according to one of the claims 1 to 5.

9. An agricultural cargo trailer, which has at least one axle and at least one braked wheel, and which is equipped with a pneumatic-pressure-operated brake system (10) according to one of the claims 1 to 5.

10. The agricultural cargo trailer, which has at least two axles and at least four braked wheels, and which is equipped with a pneumatic-pressure-operated brake system (10) according to one of the claims 1 to 5.

11. The tractor-trailer combination, comprising an agricultural towing machine and an agricultural cargo trailer according to one of the claims 9 or 10 hitched thereto and coupled both mechanically and pneumatically therewith, which cargo trailer is equipped with a pneumatic-pressure-operated brake system (10) according to one of the claims 1 to 5.

## Revendications

1. Système de freinage pneumatique fonctionnant sous pression (10) pour une remorque, notamment pour une remorque utilisable ou utilisée en agriculture, ou pour une machine de travail agricole, dans lequel il est prévu une soupape de frein de remorque (24) pour prédéfinir, en fonction de la force de freinage, une force d'actionnement de cylindres de frein (38, 40) associés à au moins deux roues d'un essieu de remorque ou de machine de travail agricole, dans lequel une grandeur de réglage d'entrée pour la variation et/ou l'étranglement, en fonction de la charge, d'une pression de commande des cylindres de frein de roue (38, 40) peut être prédéfinie manuellement au moyen d'un régulateur de force de freinage (22) réglable et dépendant automatiquement de la charge, en fonction d'un état de chargement de la remorque ou de la machine de travail agricole, **caractérisée en ce que** le régulateur de force de freinage (22) réglable manuellement et dépendant automatiquement de la charge est monté en amont de la soupape de frein de remorque (24) à commande pneumatique, lequel régulateur de force de freinage permet une variation réglable manuellement sous la forme d'une limitation échelonnée ou variable de la pression de commande (14) mise à la disposition de la soupape de frein de remorque (24) comme grandeur de réglage d'entrée.

2. Système de freinage (10) selon la revendication 1, dans lequel la grandeur de réglage d'entrée pour la commande de la soupape de frein de remorque (24) peut être variée au moyen du régulateur de force de freinage (22) monté en amont et dépendant automatiquement de la charge.

3. Système de freinage selon la revendication 1 ou 2, dans lequel le régulateur de force de freinage (22) dépendant automatiquement de la charge présente un levier de réglage (50) pouvant être pivoté ou déplacé manuellement, lequel peut être déplacé ou pivoté le long d'une coulisse (26) qui présente plusieurs points d'enclenchement (48) pour définir plusieurs positions discrètes du levier de réglage (50) et des rapports de régulation de pression en rapport avec celles-ci.

4. Système de freinage selon la revendication 3, dans lequel la coulisse (26) est agencée de manière interchangeable sur un boîtier (46) d'un module de freinage (44) contenant au moins le régulateur de force de freinage (22) dépendant automatiquement de la charge, dans lequel plusieurs coulisses différentes (26) présentent chacune des points d'enclenchement (48) positionnés différemment pour faire varier les positions ou les positions de pivotement fixant le levier de réglage (50).

5. Système de freinage selon la revendication 3 ou 4, dans lequel des coulisses différentes interchangeables (26) sont chacune associées à différents états d'équipement et/ou de charge de la remorque ou de la machine de travail.

6. Machine de travail agricole tractée qui dispose d'au moins un essieu et d'au moins une roue avec frein, et qui est équipée d'un système de freinage fonctionnant sous pression pneumatique (10) selon l'une quelconque des revendications 1 à 5.

7. Machine de travail agricole tractée qui dispose d'au moins deux essieux et d'au moins quatre roues avec frein, et qui est équipée d'un système de freinage fonctionnant sous pression pneumatique (10) selon l'une quelconque des revendications 1 à 5.

8. Ensemble de traction routier, comprenant un tracteur routier agricole et une machine de travail agricole qui y est attachée et ainsi couplée de manière mécanique ainsi que pneumatique, selon l'une quelconque des revendications 6 ou 7, qui est équipée d'un système de freinage (10) fonctionnant sous pression pneumatique selon l'une quelconque des revendications 1 à 5.

9. Remorque de chargement agricole qui dispose d'au moins un essieu et d'au moins une roue avec frein, et qui est équipée d'un système de freinage (10) fonctionnant sous pression pneumatique selon l'une quelconque des revendications 1 à 5.

10. Remorque de chargement agricole qui dispose d'au moins deux essieux et d'au moins quatre roues avec frein, et qui est équipée d'un système de freinage fonctionnant sous pression pneumatique (10) selon l'une quelconque des revendications 1 à 5.

11. Ensemble de traction routier, comprenant un tracteur routier agricole et une remorque de chargement agricole qui y est attachée et couplée de manière mécanique ainsi que pneumatique, selon l'une quelconque des revendications 9 ou 10, qui est équipée d'un système de freinage (10) fonctionnant sous pression pneumatique selon l'une quelconque des revendications 1 à 5.
